# EUROPEAN PATENT APPLICATION

(11) **EP 4 576 595 A1**
(43) Date of publication of application: **25.06.2025**
(21) Application number: 23867057.4
(22) Date of filing: 29.06.2023
(51) Int. Cl.: H04B 3/54, H04L 41/0654, H04L 41/12

(54) **POWER LINE COMMUNICATION METHOD AND APPARATUS**

(30) Priority: 21.09.2022 CN 202211149991
(71) Applicant: Huawei Technologies Co., Ltd., Shenzhen, Guangdong 518129 (CN)
(72) Inventor: ZHU, Shitao, Shenzhen, Guangdong 518129 (CN); CHEN, Wenfeng, Shenzhen, Guangdong 518129 (CN); WANG, Hailong, Shenzhen, Guangdong 518129 (CN)
(74) Representative: Gill Jennings & Every LLP
(86) International application number: PCT/CN2023/103639
(87) International publication number: WO 2024/060762

(57) **Abstract**

This application provides a power line communication method and an apparatus. The method includes: A first station generates a first broadcast packet in an n^{th} networking process of a PLC network, where n > 1, the first broadcast packet includes a first network identifier NID and a terminal equipment identifier TEI, the first NID is determined by a CCO in an (n-1)^{th} networking process of the PLC network, and the TEI uses a preset value; and sends the first broadcast packet. A second station receives the first broadcast packet; when the TEI uses the preset value, determines whether the first NID is consistent with a second NID stored in a power-off non-volatile storage medium, where the second NID is determined by the CCO in the (n-1)^{th} networking process of the PLC network; and processes the first broadcast packet when the first NID is consistent with the second NID. In this application, communication of an unconnected station can be implemented, communication efficiency of the PLC network can be improved, and use experience can be improved for a user having a real-time control requirement.

## Description

This application claims priority to Chinese Patent Application No. 202211149991.0, filed with the China National Intellectual Property Administration on September 21, 2022 and entitled "POWER LINE COMMUNICATION METHOD AND APPARATUS", which is incorporated herein by reference in its entirety.

### TECHNICAL FIELD

This application relates to power line communication technologies, and in particular, to a power line communication method and an apparatus.

### BACKGROUND

Power line communication (Power Line Communication, PLC) implemented based on the Low-voltage Power Line Broadband Communication Interoperability Technical Specification greatly facilitates network deployment and installation. Therefore, the PLC is widely applied in the field of Internet of things. However, effective communication can be performed for a PLC network only after a station (Station, STA) obtains routing information. According to the protocol, the STA can obtain the routing information only in two manners: connecting the STA to the network and periodically evaluating a route. The two manners both take a specific period of time to complete. The time varies depending on a network scale. For example, if a smart home has 150 STAs, the required time is basically more than one minute.

In one case, the PLC network may encounter a scenario in which the PLC network is powered off and then powered on again. Based on the foregoing description, in this scenario, the STA in the PLC network cannot be controlled in at least one minute, which causes low communication efficiency of the PLC network and poor user experience.

### SUMMARY

This application provides a power line communication method and an apparatus, so that communication of an unconnected station can be implemented, communication efficiency of a PLC network can be improved, and use experience can be improved for a user having a real-time control requirement.

According to a first aspect, this application provides a power line communication method. The method is applied to a PLC network. The PLC network includes a first station, a second station, and a CCO. At least one of the first station and the second station is an unconnected station. The method includes the following steps.

In an n^{th} networking process of the PLC network, the first station determines whether to send a packet, where n > 1. When determining to send the packet, the first station sends a first broadcast packet. The first broadcast packet includes a first NID, a TEI, and a MAC address, the first NID is determined by the CCO in an (n-1)^{th} networking process of the PLC network, and the TEI uses a preset value.

The second station receives the first broadcast packet, where the first broadcast packet includes the first NID, the TEI, and a first MAC address. When the TEI uses the preset value, the second station determines whether the first NID is consistent with a second NID stored in a power-off non-volatile storage medium, where the second NID is determined by the CCO in the (n-1)^{th} networking process of the PLC network. The second station processes the first broadcast packet when the first NID is consistent with the second NID, or the second station discards the first broadcast packet when the first NID is inconsistent with the second NID.

In this embodiment of this application, a broadcast packet of a new type is set, and communication of the unconnected station can be implemented by using an NID obtained in a previous network connection and a specially set TEI value. In this way, communication efficiency of the PLC network can be improved, and use experience can be improved for a user having a real-time control requirement.

In this embodiment of this application, in the n^{th} networking process of the PLC network, the first station serving as a transmit end has been either connected to the network or not connected to the network. In a case in which the first station has been connected to the network, the first station communicates with another connected station. Both the first station and the another connected station have obtained an NID for a current networking, and a TEI and routing information that are allocated by the CCO to the first station and the another connected station. Therefore, the first station may communicate with the another connected station with reference to a protocol specification. Details are not described herein again.

In this embodiment of this application, in the n^{th} networking process of the PLC network, the second station serving as a receive end has been either connected to the network or not connected to the network. In a case in which the second station has been connected to the network, the second station communicates with another connected station. Both the second station and the another connected station have obtained an NID for the current networking, and a TEI and routing information that are allocated by the CCO to the second station and the another connected station. Therefore, the second station may communicate with the another connected station with reference to a protocol specification. Details are not described herein again.

This embodiment of this application mainly relates to three cases: The first station is a connected station and the second station is an unconnected station; or the first station is an unconnected station and the second station is a connected station; or both the first station and the second station are unconnected stations. It can be learned that in the foregoing three cases, at least one of the first station and the second station cannot obtain the NID for the current networking, and cannot perform communication with reference to the protocol specification. Therefore, the power line communication method provided in this application formally resolves such a problem.

When the first station is an unconnected station, the first station includes a first NID stored in the power-off non-volatile storage medium (for example, a flash), and the first NID is determined by the CCO in the (n-1)^{th} networking process of the PLC network. When the first station is a connected station, the first station includes a second NID and the first NID stored in the flash, and the second NID is determined by the CCO in the n^{th} networking process of the PLC network.

When the second station is an unconnected station, the second station includes a second NID stored in the power-off non-volatile storage medium (for example, the flash), and the second NID is determined by the CCO in the (n-1)^{th} networking process of the PLC network. When the second station is a connected station, the second station includes a third NID and the second NID stored in the flash, and the third NID is determined by the CCO in the n^{th} networking process of the PLC network. It should be noted that the foregoing M^{th} NID and the (M')^{th} NID mentioned in the foregoing description of the first station represent NIDs having different meanings. Even if values of M and M' are equal, they do not represent a same NID.

As a transmit end, the first station may monitor whether there is a packet to be sent. If there is a packet to be sent, the first station performs the following steps. If there is no packet to be sent, the first station waits until the n^{th} networking of the PLC network is completed.

The first broadcast packet includes the first NID, the TEI, and a destination media access control (Media Access Control, MAC) address, the first NID is determined by the CCO in the (n-1)^{th} networking process of the PLC network, and the TEI uses the preset value.

Corresponding to the first station serving as the transmit end, the second station serving as the receive end receives the first broadcast packet, which also includes three parts: the first NID (an NID for a previous networking that is obtained by the first station), the TEI (for example, 0), and the first MAC address (an expected destination MAC address of the first broadcast packet sent by the first station).

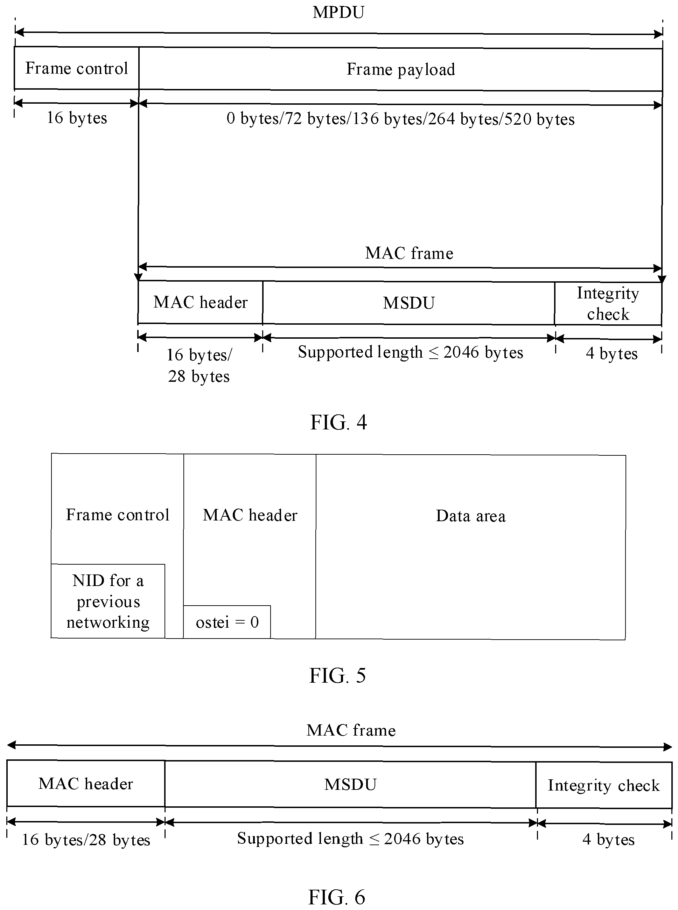

The Low-voltage Power Line Broadband Communication Interoperability Technical Specification specifies a PLC frame format. As shown in FIG. 4 (FIG. 4 is a diagram of a PLC frame format specified in a protocol), a MAC protocol data unit (MAC Protocol Data Unit, MPDU), namely, the PLC frame format, includes two parts: a frame control (16 bytes) and a frame payload (0 bytes/72 bytes/136 bytes/264 bytes/520 bytes). The frame payload includes a MAC header (16 bytes/28 bytes), a MAC service data unit (MAC Service Data Unit, MSDU) (Supported length ≤ 2046 bytes), and an integrity check (4 bytes).

In this embodiment of this application, the foregoing frame structure is improved, and a modified part includes a frame control and a MAC header. FIG. 5 is a diagram of a PLC frame format according to this application. As shown in FIG. 5, an NID (the first NID) for a previous networking (the (n-1)^{th} networking of the PLC network) is written into an NID field in the frame control, and the preset value (for example, 0) is written into an ostei field in the MAC header.

Considering that at least one of the first station and the second station is an unconnected station, and the unconnected station does not know the NID determined by the CCO in the n^{th} networking process of the PLC network, to ensure that the second station serving as the receive end can receive and correctly parse the first broadcast packet, the first NID is written into an NID field in the first broadcast packet.

The CCO allocates a TEI to the connected station. The TEI needs to be a valid TEI greater than 0. Therefore, if an ostei field in a broadcast packet is the valid TEI greater than 0, the broadcast packet is considered as a standard broadcast. The CCO has not allocated a TEI to the unconnected station. Therefore, when the corresponding unconnected station sends a broadcast packet, an ostei field is fixedly filled with 0, which is equivalent to adding a special identifier to a new type of broadcast packet (the first broadcast packet, which may also be referred to as an "unconnected proxy broadcast packet") provided in this application. In this way, the first broadcast packet and the standard broadcast packet can be distinguished.

In addition, the first broadcast packet further includes the destination MAC address. If a station serving as a destination is an unconnected station, the station does not obtain the TEI allocated by the CCO. Therefore, to identify a destination of the first broadcast packet, a complete destination MAC address needs to be carried in the packet. Correspondingly, a long MAC header needs to be used for a MAC header in the first broadcast packet.

When the TEI uses the preset value, the second station further determines whether the received first broadcast packet can be received by the second station. A determining condition may be determining whether the first NID is consistent with the second NID stored in the flash. As described above, the first NID is an NID that is obtained by the first station in a previous networking and that is included in the first broadcast packet. The second NID stored in the flash is an NID that is obtained by the second station in a previous networking (determined by the CCO in the (n-1)^{th} networking process of the PLC network). If the first NID is consistent with the second NID, it indicates that the second station can receive the first broadcast packet, or if the first NID is inconsistent with the second NID, it indicates that the second station cannot receive the first broadcast packet.

As described above, when determining that the first NID is consistent with the second NID, the second station may receive the first broadcast packet, and may further process the first broadcast packet. The processing process may include the following steps.
(1) Determine whether the first MAC address is consistent with a local second MAC address.
   As described above, the first MAC address is the expected destination MAC address of the first broadcast packet sent by the first station, and the second MAC address is a MAC address of the second station. Therefore, if the first MAC address is consistent with the second MAC address, it indicates that the second station is an expected destination of the first broadcast packet sent by the first station. If the first MAC address is inconsistent with the second MAC address, it indicates that the second station is not an expected destination of the first broadcast packet sent by the first station.
(2) When the first MAC address is inconsistent with the second MAC address, obtain role information stored in the flash.
   In this case, although the second station is not the expected destination of the first broadcast packet sent by the first station, the second station may have a function of forwarding the first broadcast packet as a proxy station. Therefore, the second station may obtain the role information of the second station from the flash. The role information indicates a proxy station or a non-proxy station. For example, the role information is identification information stored at a predetermined location. When a value of the identification information is 0, it indicates that the second station is the proxy station. When the value of the identification information is 1, it indicates that the second station is the non-proxy station. It should be understood that the foregoing description of the role information is an example for description, and does not constitute a limitation on the role information. In this embodiment of this application, the role information may be alternatively represented in another manner. This is not specifically limited herein.
(3) Forward the first broadcast packet when the role information indicates the proxy station.
   In this case, the second station serves as the proxy station, and needs to forward the packet even if the first broadcast packet is not sent to the second station. The second station may forward the first broadcast packet in a broadcast manner.
(4) Discard the first broadcast packet when the role information indicates the non-proxy station.
   In this case, the second station serves as the non-proxy station and does not assume a responsibility of forwarding the packet. Therefore, since the first broadcast packet is not sent to the second station, the second station directly discards the first broadcast packet.
(5) Perform a corresponding operation based on the first broadcast packet when the first MAC address is consistent with the second MAC address.

In this case, the second station is the expected destination of the first broadcast packet sent by the first station. In this case, the second station reads information about the first broadcast packet, and performs a corresponding operation, for example, initiates a network connection, executes a corresponding response, and the like. In this way, in a networking process of the PLC network, even if there is at least one unconnected station in the first station and the second station, communication between the first station and the second station is not affected.

As described above, if the first NID is inconsistent with the second NID, it indicates that the second station cannot receive the first broadcast packet. In this case, the second station directly discards the first broadcast packet.

Optionally, the second station may receive a second broadcast packet. When the second broadcast packet is consistent with the first broadcast packet, the second station discards the second broadcast packet.

In a possible implementation, a station (the foregoing first station or second station) included in the PLC networking obtains a new NID after being connected to the network in the n^{th} networking process of the PLC network. The new NID is determined by the CCO in the n^{th} networking process of the PLC network. The new NID is stored in the flash.

Optionally, when network connection duration of the station in the n^{th} networking process of the PLC network is greater than or equal to a second preset time (for example, 5 minutes), the foregoing historical NID (determined by the CCO in the (n-1)^{th} networking process of the PLC network) are deleted from the power-off non-volatile storage medium. In this way, it can be ensured that both the connected station and the unconnected station can communicate with each other in a networking process. In addition, after the PLC network is stable (for example, after 5 minutes), a new NID determined in the n^{th} networking of the PLC network can be used for communication.

In a possible implementation, when the network connection duration in the n^{th} networking process of the PLC network is greater than or equal to a first preset time, the role information is obtained, where the role information indicates a proxy station or a non-proxy station. The role information is stored in the flash.

According to a second aspect, this application provides a power line communication method. The method is applied to a central coordinator CCO in a power line communication PLC network. The PLC network includes a first station, a second station, and the CCO. At least one of the first station and the second station is an unconnected station. The method includes: obtaining a first network identifier NID, where the first NID is determined in an (n-1)^{th} networking process of the PLC network, and n > 1; determining whether the first NID conflicts with another NID of the PLC network; obtaining a target NID when it is determined that the first NID does not conflict with the another NID of the PLC network, where the target NID is the first NID; and starting an n^{th} networking process of the PLC network based on the target NID.

In a possible implementation, the method further includes: obtaining the target NID when it is determined that the first NID conflicts with the another NID of the PLC network, where the target NID is a second NID, and the second NID is different from the first NID.

According to a third aspect, this application provides a first station in a power line communication PLC network. The PLC network includes the first station, a second station, and a central coordinator CCO. At least one of the first station and the second station is an unconnected station. The first station includes: a processing module, configured to determine, in an n^{th} networking process of the PLC network, whether to send a packet, where n > 1; and a sending module, configured to send a first broadcast packet when it is determined to send a packet. The first broadcast packet includes a first network identifier NID, a terminal equipment identifier TEI, and a destination media access control MAC address. The first NID is determined by the CCO in an (n-1)^{th} networking process of the PLC network. The TEI uses a preset value.

In a possible implementation, the processing module is further configured to: obtain a second NID after being connected to the network in the n^{th} networking process of the PLC network, where the second NID is determined by the CCO in the n^{th} networking process of the PLC network; and store the second NID in a power-off non-volatile storage medium.

In a possible implementation, the processing module is further configured to: obtain role information when network connection duration in the n^{th} networking process of the PLC network is greater than or equal to a first preset time, where the role information indicates a proxy station or a non-proxy station; and store the role information in the power-off non-volatile storage medium.

In a possible implementation, when the first station is an unconnected station, the first station includes the first NID stored in the power-off non-volatile storage medium.

In a possible implementation, when the first station is a connected station, the first station includes the second NID and the first NID stored in the power-off non-volatile storage medium, and the second NID is determined by the CCO in the n^{th} networking process of the PLC network.

In a possible implementation, the processing module is further configured to: delete the first NID from the power-off non-volatile storage medium when the network connection duration in the n^{th} networking process of the PLC network is greater than or equal to a second preset time.

According to a fourth aspect, this application provides a second station in a power line communication PLC network. The PLC network includes a first station, the second station, and a central coordinator CCO. At least one of the first station and the second station is an unconnected station. The second station includes: a receiving module, configured to receive a first broadcast packet, where the first broadcast packet includes a first network identifier NID, a terminal equipment identifier TEI, and a first media access control MAC address; and a processing module, configured to: when the TEI uses a preset value, determine whether the first NID is consistent with a second NID stored in a power-off non-volatile storage medium, where the second NID is determined by the CCO in an (n-1)^{th} networking process of the PLC network; and process the first broadcast packet when the first NID is consistent with the second NID.

In a possible implementation, the processing module is specifically configured to: determine whether the first MAC address is consistent with a local second MAC address; when the first MAC address is inconsistent with the second MAC address, obtain role information stored in the power-off non-volatile storage medium; and forward the first broadcast packet when the role information indicates a proxy station; or discard the first broadcast packet when the role information indicates a non-proxy station.

In a possible implementation, the processing module is further configured to perform a corresponding operation based on the first broadcast packet when the first MAC address is consistent with the second MAC address.

In a possible implementation, the processing module is further configured to discard the first broadcast packet when the first NID is inconsistent with the second NID.

In a possible implementation, the receiving module is further configured to receive a second broadcast packet. The processing module is further configured to discard the second broadcast packet when the second broadcast packet is consistent with the first broadcast packet.

In a possible implementation, the processing module is further configured to: obtain a third NID after being connected to the network in an n^{th} networking process of the PLC network, where the third NID is determined by the CCO in the n^{th} networking process of the PLC network; and store the third NID in the power-off non-volatile storage medium.

In a possible implementation, the processing module is further configured to: obtain the role information when network connection duration in the n^{th} networking process of the PLC network is greater than or equal to a first preset time, where the role information indicates a proxy station or a non-proxy station; and store the role information in the power-off non-volatile storage medium.

In a possible implementation, when the second station is an unconnected station, the second station includes the second NID stored in the power-off non-volatile storage medium.

In a possible implementation, when the second station is a connected station, the second station includes the third NID and the second NID stored in the power-off non-volatile storage medium, and the third NID is determined by the CCO in the n^{th} networking process of the PLC network.

In a possible implementation, the processing module is further configured to: delete the second NID from the power-off non-volatile storage medium when the network connection duration in the n^{th} networking process of the PLC network is greater than or equal to a second preset time.

According to a fifth aspect, this application provides a central coordinator CCO in a power line communication PLC network. The PLC network includes a first station, a second station, and the CCO. At least one of the first station and the second station is an unconnected station. The CCO includes: a processing module, configured to: obtain a first network identifier NID, where the first NID is determined in an (n-1)^{th} networking process of the PLC network, and n > 1; determine whether the first NID conflicts with another NID of the PLC network; and obtain a target NID when it is determined that the first NID does not conflict with the another NID of the PLC network, where the target NID is the first NID; and a networking module, configured to start an n^{th} networking process of the PLC network based on the target NID.

In a possible implementation, the processing module is further configured to obtain the target NID when it is determined that the first NID conflicts with the another NID of the PLC network. The target NID is a second NID, and the second NID is different from the first NID.

According to a sixth aspect, this application provides a station, including: one or more processors; and a memory, configured to store one or more programs. When the one or more programs are executed by the one or more processors, the one or more processors are enabled to implement the method according to any one of the implementations of the first aspect and the second aspect.

According to a seventh aspect, this application provides a central coordinator CCO, including: one or more processors; and a memory, configured to store one or more programs. When the one or more programs are executed by the one or more processors, the one or more processors are enabled to implement the method according to any one of the implementations of the third aspect.

According to an eighth aspect, this application provides a computer-readable storage medium, including a computer program. When the computer program is executed on a computer, the computer is enabled to perform the method according to any one of the implementations of the first aspect to the third aspect.

According to a ninth aspect, this application provides a computer program product. The computer program product includes computer program code. When the computer program code is run on a computer, the computer is enabled to perform the method according to any one of the implementations of the first aspect to the third aspect.

### BRIEF DESCRIPTION OF DRAWINGS

FIG. 1 is a diagram of a structure of a PLC network;
FIG. 2 is a diagram of structures of a PLC network before being powered off and after being powered on again;
FIG. 3 is a flowchart of a process 300 of a power line communication method according to an embodiment of this application;
FIG. 4 is a diagram of a PLC frame format specified in a protocol;
FIG. 5 is a diagram of a PLC frame format according to this application;
FIG. 6 is a diagram of a frame payload specified in a protocol;
FIG. 7 is a flowchart of a power line communication method according to an embodiment of this application;
FIG. 8 is a diagram of a structure of a station 800 in a PLC network according to an embodiment of this application; and
FIG. 9 is a diagram of a structure of a COO 900 in a PLC network according to an embodiment of this application.

### DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover a non-exclusive inclusion, for example, include a series of steps or units. Methods, systems, products, or devices are not necessarily limited to those steps or units that are explicitly listed, but may include other steps or units that are not explicitly listed or that are inherent to such processes, methods, products, or devices.

It should be understood that in this application, "at least one" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following" or similar expressions mean any combination of these items, including any combination of single items or a plurality of items. For example, at least one of a, b, or c may indicate a, b, c, a and b, a and c, b and c, or a, b, and c, where a, b, and c may be singular or plural.

A networking process of a PLC network may be performed hierarchically: After being powered on, a central coordinator (Central Coordinator, CCO) periodically sends a beacon. A STA that receives the beacon sends an association request to the CCO, to apply to be connected to the PLC network. After being connected to the network, the STA is a first-level station. After the first-level station is connected to the PLC network, the CCO may arrange a beacon slot for the first-level station to send a discovery beacon. Sending of the discovery beacon may trigger a station around the first-level station to initiate an association request. After a second-level station is connected to the network, the CCO may arrange a beacon slot for the second-level station to send a discovery beacon. Sending of the discovery beacon may trigger a third-level station around the second-level station to initiate an association request. This process is repeated so that a highest-level STA farthest from the CCO can be connected to the PLC network.

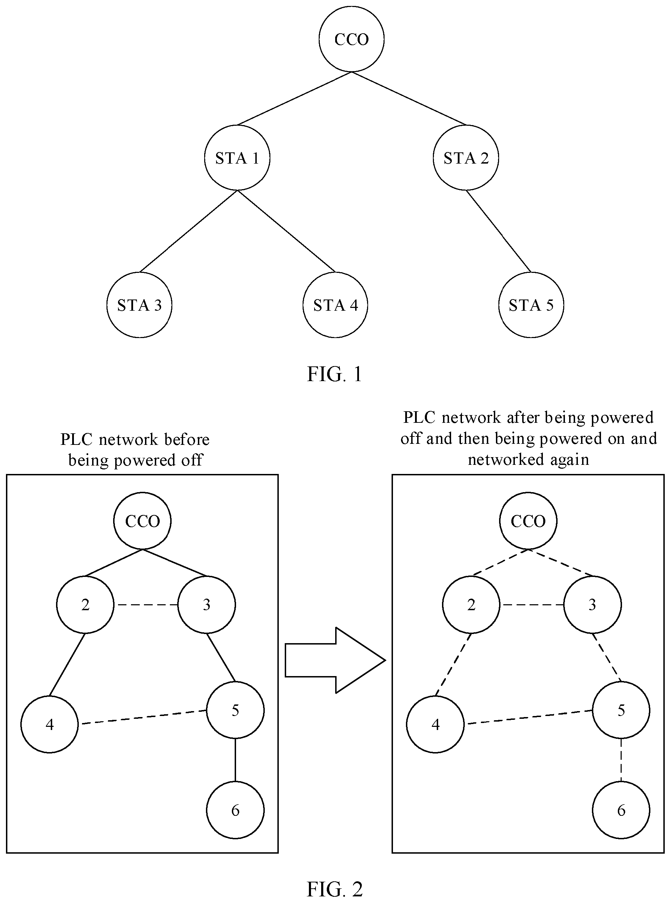

In the networking process of the PLC network, tree routing information of each station may be formed. With the routing information, communication can be established from the CCO to the STA, from the STA to the CCO, and between two STAs. For example, FIG. 1 is a diagram of a structure of a PLC network. As shown in FIG. 1, after networking of the PLC network is completed, a CCO may communicate with a STA 1 to a STA 5 that have been connected to the network.

However, according to a protocol, before the STA is connected to the PLC network, there is no routing information and no network identifier (Network Identifier, NID). Therefore, communication cannot be established between STAs. According to the Low-voltage Power Line Broadband Communication Interoperability Technical Specification, a reason for which communication cannot be established when the STA is powered on but is not connected to the network is that the unconnected station does not know an NID of a connected station, a terminal equipment identifier (Terminal Equipment Identifier, TEI) allocated by the CCO, or a route to another station. The unconnected station cannot determine whether a packet should be received, and does not know how to forward the received packet for not having the route, resulting in a communication failure. After power-on, a physical line between stations is connected. As long as a filtering problem of packet receiving and a routing problem of packet forwarding of the unconnected station are resolved, the foregoing problem of the communication failure can be resolved, and stations in the PLC network can communicate with each other after being powered on.

Usually, a location of the station in the PLC network does not change, and therefore, a communication line does not change. Theoretically, networking information (including an NID, a TEI, and a station route) that can be used for communication before the station is powered off can still be used for PLC network communication after the station is powered off and then powered on again. Therefore, it is feasible to use information obtained in a previous networking of the PLC network to resolve the problem of sending and receiving a packet of the unconnected station. For example, FIG. 2 is a diagram of structures of a PLC network before being powered off and after being powered on again. As shown in FIG. 2, before power-off of the PLC network, stations 2, 3, and 5 are proxy stations, and substations (stations 4 and 6) under the stations 2, 3, and 5 can receive packets sent by the proxy stations. In a process in which the PLC network is powered off and then powered on and networked again, although the stations have not been connected to the network, locations of the stations do not change. If the stations 2, 3, and 5 send packets, the substations under the stations 2, 3, and 5 can receive the packets.

Based on this, this application provides a power line communication method, to implement an objective that a station in a PLC network can communicate after being powered on. The power line communication method may be applied to an n^{th} networking process of the PLC network shown in FIG. 1, where n > 1. The PLC network includes a CCO, a first station (for example, any one of a STA 1 to a STA 5) and a second station (for example, any one of the STA 1 to the STA 5 except the first station). After (n-1)^{th} networking of the PLC network is completed, both the first station and the second station are connected stations. In the n^{th} networking process of the PLC network, at least one of the first station and the second station is an unconnected station. For example, the first station is a connected station and the second station is an unconnected station; or the first station is an unconnected station and the second station is a connected station; or both the first station and the second station are unconnected stations.

In this embodiment of this application, in the n^{th} networking process of the PLC network, the CCO preferentially uses, for re-networking, an NID determined in the (n-1)^{th} networking of the PLC network. In other words, an NID used last time is preferentially used as an NID filled in a beacon to be sent by the CCO. For example, NID = 10. If it is found that the NID used last time conflicts with a surrounding NID of the PLC network, NID coordination is performed according to a standard protocol, and an NID is reconfigured. For example, a new NID = 11. However, according to a running status of the PLC network, after the PLC network is deployed, a location of the PLC network is fixed, and the NID usually uses a 24-bit number. Therefore, a probability of coordination caused by same NIDs (the protocol specifies that when two NIDs of the PLC network are the same, there is a coordination mechanism to coordinate the same NIDs to different values) is not high. Based on this, it can be ensured at a high probability that an NID used after the PLC network is powered off and then powered on again is the same as a previous NID. Therefore, the CCO preferentially uses, for re-networking, the NID determined in the (n-1)^{th} networking of the PLC network. This not only has data support, but also can improve networking efficiency.

In the n^{th} networking process of the PLC network, the connected station can obtain an NID determined by the CCO in the current networking. In this case, the connected station can obtain two NIDs: one is an NID for a previous networking (stored in a power-off non-volatile storage medium), and the other is the NID for the current networking. The two NIDs may be the same or different. However, the unconnected station cannot obtain the NID determined by the CCO in the current networking. Therefore, only the NID (stored in the power-off non-volatile storage medium) for the previous networking can be obtained. For details about a process in which the station stores the NID for the previous networking, refer to the following description.

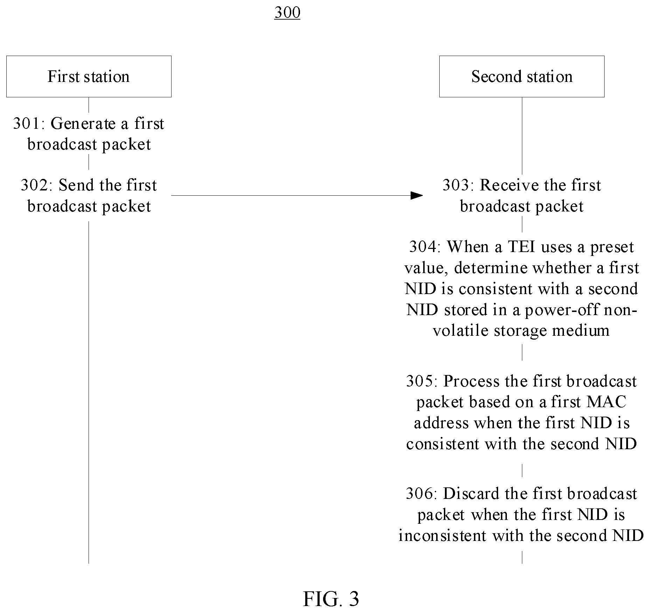

FIG. 3 is a flowchart of a process 300 of a power line communication method according to an embodiment of this application. The process 300 may be jointly performed by the first station and the second station. The process 300 includes a series of steps or operations. It should be understood that the process 300 may be performed in various sequences and/or simultaneously, and is not limited to an execution sequence shown in FIG. 3. The process 300 may include the following steps.

Step 301: The first station generates a first broadcast packet.

In this embodiment of this application, in the n^{th} networking process of the PLC network, the first station serving as a transmit end has been either connected to the network or not connected to the network. In a case in which the first station has been connected to the network, the first station communicates with another connected station. Both the first station and the another connected station have obtained an NID for the current networking, and a TEI and routing information that are allocated by the CCO to the first station and the another connected station. Therefore, the first station may communicate with the another connected station with reference to a protocol specification. Details are not described herein again.

This embodiment of this application mainly relates to three cases: The first station is a connected station and the second station is an unconnected station; or the first station is an unconnected station and the second station is a connected station; or both the first station and the second station are unconnected stations. It can be learned that in the foregoing three cases, at least one of the first station and the second station cannot obtain the NID for the current networking, and cannot perform communication with reference to the protocol specification. Therefore, the power line communication method provided in this application formally resolves such a problem.

As described above, when the first station is an unconnected station, the first station includes a first NID stored in the power-off non-volatile storage medium (for example, a flash), and the first NID is determined by the CCO in the (n-1)^{th} networking process of the PLC network. When the first station is a connected station, the first station includes a second NID and the first NID stored in the flash, and the second NID is determined by the CCO in the n^{th} networking process of the PLC network.

As a transmit end, the first station may monitor whether there is a packet to be sent. If there is a packet to be sent, the first station performs the following steps. If there is no packet to be sent, the first station waits until the n^{th} networking of the PLC network is completed.

The first broadcast packet includes the first NID, the TEI, and a destination media access control (Media Access Control, MAC) address, the first NID is determined by the CCO in the (n-1)^{th} networking process of the PLC network, and the TEI uses the preset value.

The Low-voltage Power Line Broadband Communication Interoperability Technical Specification specifies a PLC frame format. As shown in FIG. 4 (FIG. 4 is a diagram of a PLC frame format specified in a protocol), a MAC protocol data unit (MAC Protocol Data Unit, MPDU), namely, the PLC frame format, includes two parts: a frame control (16 bytes) and a frame payload (0 bytes/72 bytes/136 bytes/264 bytes/520 bytes). The frame payload includes a MAC header (16 bytes/28 bytes), a MAC service data unit (MAC Service Data Unit, MSDU) (Supported length ≤ 2046 bytes), and an integrity check (4 bytes).

**Table 1 Format of a frame control field of an MPDU**

| Field | Byte number | Bit | Field size (bit) |
|---|---|---|---|
| Delimiter type | 0 | 0-2 | 3 |
| Network type | | 3-7 | 5 |
| Network identifier | 1 | 0-7 | 24 |
| | 2 | 0-7 | |
| | 3 | 0-7 | |
| Variable area | 4-11 | 0-7 | 68 |
| | 12 | 0-3 | |
| Standard version number | 12 | 4-7 | 4 |
| Frame control check sequence | 13-15 | | 24 |

**Table 2 Format of a frame payload field of an MPDU**

| Field | Byte number | Bit | Field size (bit) |
|---|---|---|---|
| Version | 0 | 0-3 | 4 |
| Original source TEI | | 4-7 | 12 |
| | 1 | 0-7 | |
| Original destination TEI | 2 | 0-7 | 12 |
| | 3 | 0-3 | |
| Sending type | | 4-7 | 4 |
| Limit of a quantity of sending times | 4 | 0-4 | 5 |
| Reserved | | 5-7 | 3 |
| MSDU sequence number | 5 | 0-7 | 16 |
| | 6 | 0-7 | |
| MSDU type | 7 | 0-7 | 8 |
| MSDU length | 8 | 0-7 | 11 |
| | 9 | 0-2 | |
| Restart times | | 3-6 | 4 |
| Proxy primary path identifier | | 7 | 1 |
| Total route hops | 10 | 0-3 | 4 |
| Remaining route hops | | 4-7 | 4 |
| Broadcast direction | 11 | 0-1 | 2 |
| Path repair flag | | 2 | 1 |
| MAC address flag | | 3 | 1 |
| Reserved | | 4-7 | 12 |
| | 12 | 0-7 | |
| Networking sequence number | 13 | 0-7 | 8 |
| Reserved | 14 | 0-7 | 8 |
| Reserved | 15 | 0-7 | 8 |
| Original source MAC address | 0 or 16-21 | 0-7 | 0 or 48 |
| Original destination MAC address | 0 or 22-27 | 0-7 | 0 or 48 |

In this embodiment of this application, the foregoing frame structure is improved, and a modified part includes a frame control and a MAC header. FIG. 5 is a diagram of a PLC frame format according to this application. As shown in FIG. 5, an NID (the first NID) for a previous networking (the (n-1)^{th} networking of the PLC network) is written into an NID field in the frame control, and the preset value (for example, 0) is written into an ostei field in the MAC header.

Considering that at least one of the first station and the second station is an unconnected station, and the unconnected station does not know the NID determined by the CCO in the n^{th} networking process of the PLC network, to ensure that the second station serving as the receive end can receive and correctly parse the first broadcast packet, the first NID is written into an NID field in the first broadcast packet.

The CCO allocates a TEI to the connected station. The TEI needs to be a valid TEI greater than 0. Therefore, if an ostei field in a broadcast packet is the valid TEI greater than 0, the broadcast packet is considered as a standard broadcast. The CCO has not allocated a TEI to the unconnected station. Therefore, when the corresponding unconnected station sends a broadcast packet, an ostei field is fixedly filled with 0, which is equivalent to adding a special identifier to a new type of broadcast packet (the first broadcast packet, which may also be referred to as an "unconnected proxy broadcast packet") provided in this application. In this way, the first broadcast packet and the standard broadcast packet can be distinguished.

In addition, the first broadcast packet further includes the destination MAC address. If a station serving as a destination is an unconnected station, the station does not obtain the TEI allocated by the CCO. Therefore, to identify a destination of the first broadcast packet, a complete destination MAC address needs to be carried in the packet. Correspondingly, a long MAC header needs to be used for a MAC header in the first broadcast packet.

Step 302: The first station sends the first broadcast packet.

The first station may send the first broadcast packet after generating the first broadcast packet. As the name implies, the first broadcast packet may be sent in a broadcast form.

Step 303: The second station receives the first broadcast packet.

In this embodiment of this application, in the n^{th} networking process of the PLC network, the second station serving as a receive end has been either connected to the network or not connected to the network. In a case in which the second station has been connected to the network, the second station communicates with another connected station. Both the second station and the another connected station have obtained an NID for the current networking, and a TEI and routing information that are allocated by the CCO to the second station and the another connected station. Therefore, the second station may communicate with the another connected station with reference to a protocol specification. Details are not described herein again.

This embodiment of this application mainly relates to three cases: The first station is a connected station and the second station is an unconnected station; or the first station is an unconnected station and the second station is a connected station; or both the first station and the second station are unconnected stations. It can be learned that in the foregoing three cases, at least one of the first station and the second station cannot obtain the NID for the current networking, and cannot perform communication with reference to the protocol specification. Therefore, the power line communication method provided in this application formally resolves such a problem.

As described above, when the second station is an unconnected station, the second station includes a second NID stored in the power-off non-volatile storage medium (for example, the flash), and the second NID is determined by the CCO in the (n-1)^{th} networking process of the PLC network. When the second station is a connected station, the second station includes a third NID and the second NID stored in the flash, and the third NID is determined by the CCO in the n^{th} networking process of the PLC network. It should be noted that the foregoing M^{th} NID and the (M')^{th} NID mentioned in the foregoing description of the first station represent NIDs having different meanings. Even if values of M and M' are equal, they do not represent a same NID.

Corresponding to the first station serving as the transmit end, the second station serving as the receive end receives the first broadcast packet, which also includes three parts: the first NID (an NID for a previous networking that is obtained by the first station), the TEI (for example, 0), and the first MAC address (an expected destination MAC address of the first broadcast packet sent by the first station).

Step 304: When the TEI uses the preset value, the second station determines whether the first NID is consistent with the second NID stored in the power-off non-volatile storage medium.

The TEI uses the preset value (for example, 0) to indicate that the first broadcast packet is a new type of broadcast packet (the foregoing "unconnected proxy broadcast packet") provided in this application. However, this embodiment of this application mainly relates to communication of the unconnected station. Therefore, if the TEI does not use the preset value, communication may be performed with reference to a protocol specification. Details are not described herein again.

When the TEI uses the preset value, the second station further determines whether the received first broadcast packet can be received by the second station. A determining condition may be determining whether the first NID is consistent with the second NID stored in the flash. As described above, the first NID is an NID that is obtained by the first station in a previous networking and that is included in the first broadcast packet. The second NID stored in the flash is an NID that is obtained by the second station in a previous networking (determined by the CCO in the (n-1)^{th} networking process of the PLC network). If the first NID is consistent with the second NID, it indicates that the second station can receive the first broadcast packet, or if the first NID is inconsistent with the second NID, it indicates that the second station cannot receive the first broadcast packet.

Step 305: The second station processes the first broadcast packet when the first NID is consistent with the second NID.

As described above, when determining that the first NID is consistent with the second NID, the second station may receive the first broadcast packet, and may further process the first broadcast packet. The processing process may include the following steps.
(1) Determine whether the first MAC address is consistent with a local second MAC address.
   As described above, the first MAC address is the expected destination MAC address of the first broadcast packet sent by the first station, and the second MAC address is a MAC address of the second station. Therefore, if the first MAC address is consistent with the second MAC address, it indicates that the second station is an expected destination of the first broadcast packet sent by the first station. If the first MAC address is inconsistent with the second MAC address, it indicates that the second station is not an expected destination of the first broadcast packet sent by the first station.
(2) When the first MAC address is inconsistent with the second MAC address, obtain role information stored in the flash.
   In this case, although the second station is not the expected destination of the first broadcast packet sent by the first station, the second station may have a function of forwarding the first broadcast packet as a proxy station. Therefore, the second station may obtain the role information of the second station from the flash. The role information indicates a proxy station or a non-proxy station. For example, the role information is identification information stored at a predetermined location. When a value of the identification information is 0, it indicates that the second station is the proxy station. When the value of the identification information is 1, it indicates that the second station is the non-proxy station. It should be understood that the foregoing description of the role information is an example for description, and does not constitute a limitation on the role information. In this embodiment of this application, the role information may be alternatively represented in another manner. This is not specifically limited herein.
(3) Forward the first broadcast packet when the role information indicates the proxy station.
   In this case, the second station serves as the proxy station, and needs to forward the packet even if the first broadcast packet is not sent to the second station. The second station may forward the first broadcast packet in a broadcast manner.
(4) Discard the first broadcast packet when the role information indicates the non-proxy station.
   In this case, the second station serves as the non-proxy station and does not assume a responsibility of forwarding the packet. Therefore, since the first broadcast packet is not sent to the second station, the second station directly discards the first broadcast packet.
(5) Perform a corresponding operation based on the first broadcast packet when the first MAC address is consistent with the second MAC address.

In this case, the second station is the expected destination of the first broadcast packet sent by the first station. In this case, the second station reads information about the first broadcast packet, and performs a corresponding operation, for example, initiates a network connection, executes a corresponding response, and the like. In this way, in a networking process of the PLC network, even if there is at least one unconnected station in the first station and the second station, communication between the first station and the second station is not affected.

Step 306: The second station discards the first broadcast packet when the first NID is inconsistent with the second NID.

As described above, if the first NID is inconsistent with the second NID, it indicates that the second station cannot receive the first broadcast packet. In this case, the second station directly discards the first broadcast packet.

Optionally, the second station may receive a second broadcast packet. When the second broadcast packet is consistent with the first broadcast packet, the second station discards the second broadcast packet.

To be specific, as shown in FIG. 2, a station 6, namely, the first station serving as the transmit end, sends a first broadcast packet, and a destination of the first packet is a station 4. After the first broadcast packet is received by a station 5, because of a role of a proxy station of the station 5, the station 5 serving as a receive end forwards the first broadcast packet. After the first broadcast packet is received by the station 6, also because of a role of a proxy station of the station 6, the station 6 serving as a receive end forwards the first broadcast packet. A station 2 sequentially receives the first broadcast packet from the station 5 and the first broadcast packet (referred to as a second broadcast packet for distinguishing) from the station 6, and determines, through comparison, that the first broadcast packet and the second broadcast packet are consistent (carried NID fields, TEI fields, and destination MAC addresses are the same). In this case, to improve efficiency, the station 2 may discard the second broadcast packet, and process (for example, forward or perform a corresponding operation on) only the first broadcast packet.

In this embodiment of this application, a broadcast packet of a new type is set, and communication of the unconnected station can be implemented by using an NID obtained in a previous network connection and a specially set TEI value. In this way, communication efficiency of the PLC network can be improved, and use experience can be improved for a user having a real-time control requirement.

In a possible implementation, a station (the foregoing first station or second station) included in the PLC networking obtains a new NID after being connected to the network in the n^{th} networking process of the PLC network. The new NID is determined by the CCO in the n^{th} networking process of the PLC network. The new NID is stored in the flash.

To be specific, in the n^{th} networking process of the PLC network, a network connection status of a station changes dynamically. It is possible that unconnected stations constantly change into connected stations, or that connected stations constantly change into unconnected stations due to an unstable network. However, any connected station may obtain a new NID determined by the CCO in the current networking process (the n^{th} networking process of the PLC network). Therefore, to implement the foregoing method embodiment, the connected station may store the newly obtained NID for the current networking in the power-off non-volatile storage medium, for example, the flash, to facilitate use in a networking process after the PLC network is powered off and then powered on again. It should be noted that, in this embodiment of this application, the new NID determined by the CCO in the n^{th} networking process of the PLC network may be the same as or different from the historical NID determined by the CCO in the (n-1)^{th} networking process of the PLC network. This is not specifically limited herein.

Optionally, when network connection duration of the station in the n^{th} networking process of the PLC network is greater than or equal to a second preset time (for example, 5 minutes), the foregoing historical NID (determined by the CCO in the (n-1)^{th} networking process of the PLC network) are deleted from the power-off non-volatile storage medium. In this way, it can be ensured that both the connected station and the unconnected station can communicate with each other in a networking process. In addition, after the PLC network is stable (for example, after 5 minutes), a new NID determined in the n^{th} networking of the PLC network can be used for communication.

In a possible implementation, when the network connection duration in the n^{th} networking process of the PLC network is greater than or equal to a first preset time, the role information is obtained, where the role information indicates a proxy station or a non-proxy station. The role information is stored in the flash.

To be specific, in the n^{th} networking process of the PLC network, a role of a station (the foregoing first station or second station) also changes dynamically. The station may change from a proxy station before being powered off into a non-proxy station after being powered off and then being powered on again, or may be a non-proxy station temporarily because the following station has not been connected to the network, or may jump between the proxy station and the non-proxy station due to an unstable network, or the like. Therefore, to reduce turbulence of the PLC network in the n^{th} networking process, the connected station may record a role of the connected station after being connected to the network for the first preset time (for example, two route evaluation periods). A station that records itself as a proxy station may include a proxy station newly connected to the network and a proxy station connected to the network last time.

Based on the embodiment shown in FIG. 3, the power line communication method provided in this application includes the following key points.
1. The Low-voltage Power Line Broadband Communication Interoperability Technical Specification specifies a PLC frame format. As shown in FIG. 4, the PLC frame format includes two parts: a frame control and a frame payload. The frame payload includes a MAC header, an MSDU, and an integrity check. However, this specification is specified based on the premise of communication between stations after the stations join the network control and are connected to the network. The requirements for communication between unconnected stations and between a connected station and an unconnected station are not considered. Therefore, some modifications need to be made to the protocol standard to support communication between unconnected stations. The modified content includes fields of the frame control and the MAC header, as shown in FIG. 5.
2. After the station is connected to the network, the NID for the current network connection is stored in the flash. It is specified that both the connected station and the unconnected station can receive a packet whose NID is an NID for the previous network connection. A current NID of the unconnected station has not been determined. If an NID filled in the packet needs to be sent, the NID stored in the previous network connection is used. If the connected station is to communicate with the unconnected station, the NID filled in the sent packet uses the NID for the previous network connection. The NID sent in packets between the connected stations may use the NID for the current network connection.
   The CCO preferentially uses the previous NID for networking. If it is found that the NID conflicts with a surrounding NID of the network, the CCO coordinates the NID based on the standard protocol. In this way, it can be ensured at a high probability that the NID of the network is the same after the network is powered off and then powered on again. After the PLC network is deployed, a location is fixed and the NID is a 24-bit number. A probability of coordination caused by same NIDs (the protocol specifies that when two NIDs of the network are the same, there is a coordination mechanism to coordinate the same NID to different values) is not high.
3. A proxy station in the network is identified and stored in the flash. This is intended to find a route through which a packet can be forwarded in a network that is not completely connected to the network. After each station has been connected to the network for two route evaluation periods (the two route evaluation periods are set as a threshold because the route is unstable after the station is connected to the network, and the route is more stable after the two route evaluation periods), role information of the station is stored in the flash. When the station is connected to the network again, whether the station connected to the network last time is a proxy station can be determined based on the role. If a station is selected as a proxy in the PLC network, it means that there is a sub-station that needs to communicate through the proxy. If each proxy station forwards a same packet, all stations in the PLC network can receive the packet.
4. If the unconnected station sends a packet or the connected station sends a packet to the unconnected station, a special packet is used. A receiving station needs to be able to identify the packet, and only the packet received by the proxy station (including a proxy station newly connected to the network and a proxy station connected to the network last time) is forwarded. A leaf station only receives the packet without forwarding the packet. This is similar to a proxy broadcast sending procedure in the original protocol. However, to support the unconnected station in forwarding the packet, a special flag needs to be used to distinguish the packet from a standard broadcast packet.

The connected station CCO allocates a TEI. The allocated TEI is necessarily a valid TEI greater than 0. If ostei in a proxy broadcast is filled with the valid TEI greater than 0, the proxy broadcast is considered as a standard broadcast. The unconnected station CCO has not allocated a TEI to a station. Therefore, it is specified that ostei is fixedly filled with 0 when the unconnected station sends a proxy broadcast packet. Therefore, the proxy broadcast packet with ostei being 0 is used as a new type of broadcast packet, which is referred to as an "unconnected proxy broadcast packet". Meanings of all fields except ostei in the unconnected proxy broadcast packet are the same as those in the standard broadcast packet.

If a station receives a proxy broadcast packet with ostei being 0, the station does not determine the packet as an invalid packet and discards it. Instead, the station processes the packet as a proxy broadcast packet sent by the unconnected station. For the "unconnected proxy broadcast packet", both a station whose historical role is the proxy station and a station that is a proxy station in the current network connection are required to forward the packet to ensure that all stations can receive the packet. As shown in FIG. 6 (FIG. 6 is a diagram of a frame payload specified in a protocol), Table 1, and Table 2, to support communication between the unconnected stations, content filled in a field defined in the protocol needs to be limited. The "original source TEI" in the frame payload (also referred to as a MAC frame) is a TEI of a station that generates a packet. The packet always carries the "original source TEI" during the forwarding process, and the original source TEI is not 0 according to the protocol. To implement communication between the unconnected stations, a proxy broadcast packet whose "original source TEI" is 0 is also a valid packet. In addition, when the connected station needs to communicate with the unconnected station, the "original source TEI" also needs to be set to 0. Each station determines that the packet is an unconnected proxy broadcast packet based on the "original source TEI" being 0 and the packet sending type being a "proxy broadcast".

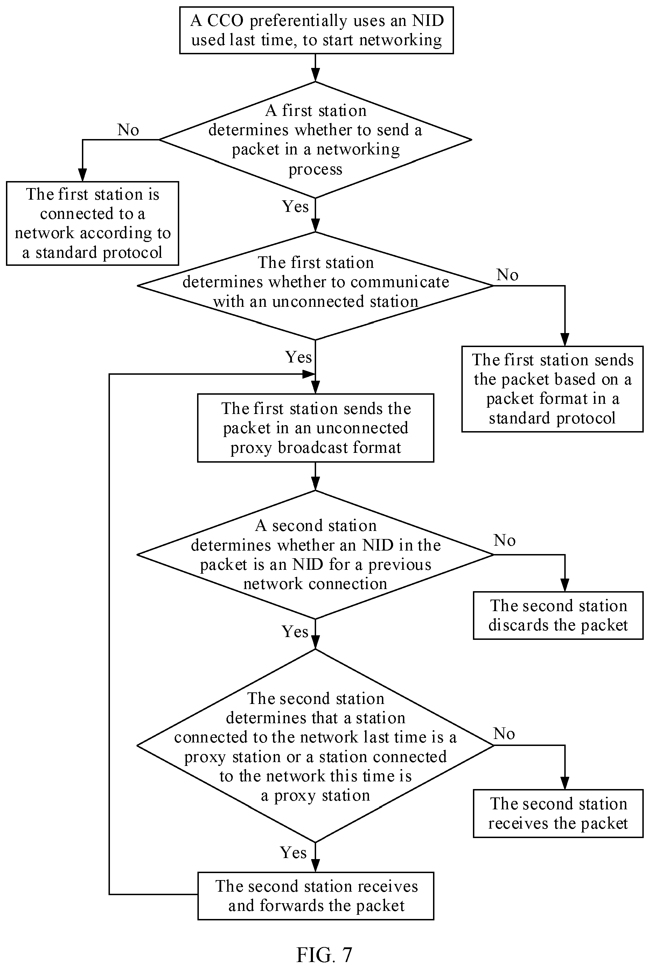

FIG. 7 is a flowchart of a power line communication method according to an embodiment of this application. The method may be jointly performed by the CCO, the first station, and the second station. The method includes the following steps.
(1) The CCO preferentially uses an NID used last time, to start networking.
(2) The first station determines whether to send a packet in a networking process.
   Step (4) is performed if the first station determines to send the packet in the networking process; or step (3) is performed if the first station determines not to send the packet in the networking process.
(3) The first station is connected to a network according to a standard protocol. The procedure ends.
(4) The first station determines whether to communicate with an unconnected station.
   Step (6) is performed if the first station determines to communicate with the unconnected station; or step (5) is performed if the first station determines not to communicate with the unconnected station.
(5) The first station sends the packet based on a packet format in a standard protocol. The procedure ends.
(6) The first station sends the packet in an unconnected proxy broadcast format.
   An NID in this packet is an NID for a previous network connection, ostei is 0, and a sending type is a proxy broadcast.
(7) The second station determines whether the NID in the packet is the NID for the previous network connection.
   Step (9) is performed if the NID in the packet is the NID for the previous network connection; or step (8) is performed if the NID in the packet is not the NID for the previous network connection.
(8) The second station discards the packet. The procedure ends.
(9) The second station determines whether a station connected to the network last time is a proxy station or a station connected to the network this time is a proxy station.
   Step (11) is performed if the station connected to the network last time is a proxy station or the station connected to the network this time is a proxy station; or step (10) is performed if neither the station connected to the network last time is a proxy station nor the station connected to the network this time is a proxy station.
(10) The second station receives the packet. The procedure ends.
(11) The second station receives and forwards the packet. The procedure ends.

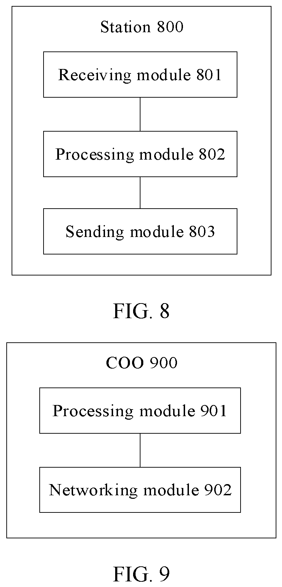

FIG. 8 is a diagram of a structure of a station 800 in a PLC network according to an embodiment of this application. The station 800 may be used in the PLC network, and includes a receiving module 801, a processing module 802, and a sending module 803.

When the station 800 is a first station in the PLC network, the processing module 802 is configured to generate a first broadcast packet in an n^{th} networking process of the PLC network, where n > 1, the first broadcast packet includes a first network identifier NID and a terminal equipment identifier TEI, the first NID is determined by a CCO in an (n-1)^{th} networking process of the PLC network, and the TEI uses a preset value. The sending module 803 is configured to send the first broadcast packet.

In a possible implementation, the processing module 802 is further configured to: obtain a second NID after being connected to the network in the n^{th} networking process of the PLC network, where the second NID is determined by the CCO in the n^{th} networking process of the PLC network; and store the second NID in a power-off non-volatile storage medium.

In a possible implementation, the processing module 802 is further configured to: obtain role information when network connection duration in the n^{th} networking process of the PLC network is greater than or equal to a first preset time, where the role information indicates a proxy station or a non-proxy station; and store the role information in the power-off non-volatile storage medium.

In a possible implementation, when the first station is an unconnected station, the first station includes the first NID stored in the power-off non-volatile storage medium.

In a possible implementation, when the first station is a connected station, the first station includes the second NID and the first NID stored in the power-off non-volatile storage medium, and the second NID is determined by the CCO in the n^{th} networking process of the PLC network.

In a possible implementation, the processing module 802 is further configured to: delete the first NID from the power-off non-volatile storage medium when the network connection duration in the n^{th} networking process of the PLC network is greater than or equal to a second preset time.

In a possible implementation, the first broadcast packet further includes a destination media access control MAC address.

When the station 800 is a second station in the PLC network, the receiving module 801 is configured to receive a first broadcast packet, where the first broadcast packet includes a first network identifier NID and a terminal equipment identifier TEI. The processing module 802 is configured to: when the TEI uses a preset value, determine whether the first NID is consistent with a second NID stored in a power-off non-volatile storage medium, where the second NID is determined by the CCO in an (n-1)^{th} networking process of the PLC network; and process the first broadcast packet when the first NID is consistent with the second NID.

In a possible implementation, the first broadcast packet further includes a first media access control MAC address. The processing module 802 is specifically configured to: determine whether the first MAC address is consistent with a local second MAC address; when the first MAC address is inconsistent with the second MAC address, obtain role information stored in the power-off non-volatile storage medium; and forward the first broadcast packet when the role information indicates a proxy station; or discard the first broadcast packet when the role information indicates a non-proxy station.

In a possible implementation, the processing module 802 is further configured to perform a corresponding operation based on the first broadcast packet when the first MAC address is consistent with the second MAC address.

In a possible implementation, the processing module 802 is further configured to discard the first broadcast packet when the first NID is inconsistent with the second NID.

In a possible implementation, the receiving module 801 is further configured to receive a second broadcast packet. The processing module 802 is further configured to discard the second broadcast packet when the second broadcast packet is consistent with the first broadcast packet.

In a possible implementation, the processing module 802 is further configured to: obtain a third NID after being connected to the network in an n^{th} networking process of the PLC network, where the third NID is determined by the CCO in the n^{th} networking process of the PLC network; and store the third NID in the power-off non-volatile storage medium.

In a possible implementation, the processing module 802 is further configured to: obtain role information when network connection duration in the n^{th} networking process of the PLC network is greater than or equal to a first preset time, where the role information indicates a proxy station or a non-proxy station; and store the role information in the power-off non-volatile storage medium.

In a possible implementation, when the second station is an unconnected station, the second station includes the second NID stored in the power-off non-volatile storage medium.

In a possible implementation, when the second station is a connected station, the second station includes the third NID and the second NID stored in the power-off non-volatile storage medium, and the third NID is determined by the CCO in the n^{th} networking process of the PLC network.

In a possible implementation, the processing module 802 is further configured to: delete the second NID from the power-off non-volatile storage medium when the network connection duration in the n^{th} networking process of the PLC network is greater than or equal to a second preset time.

The station 800 in this embodiment may be configured to execute the technical solution of the method embodiment shown in FIG. 3. Implementation principles and technical effects thereof are similar, and details are not described herein again.

FIG. 9 is a diagram of a structure of a COO 900 in a PLC network according to an embodiment of this application. The COO 900 may be used in a PLC network, and includes a processing module 901 and a networking module 902.

The processing module 901 is configured to: obtain a first network identifier NID, where the first NID is determined in an (n-1)^{th} networking process of the PLC network, and n > 1; determine whether the first NID conflicts with another NID of the PLC network; and obtain a target NID when it is determined that the first NID does not conflict with the another NID of the PLC network, where the target NID is the first NID. The networking module 902 is configured to start an n^{th} networking process of the PLC network based on the target NID.

In a possible implementation, the processing module 901 is further configured to obtain the target NID when it is determined that the first NID conflicts with the another NID of the PLC network. The target NID is a second NID, and the second NID is different from the first NID.

The COO 900 in this embodiment may be configured to execute the technical solution of the method embodiment shown in FIG. 3. Implementation principles and technical effects thereof are similar, and details are not described herein again.

In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the mutual coupling or direct coupling or communication connection shown or discussed may be indirect coupling or communication connection through some interfaces, apparatuses, or units, and may be in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A power line communication method, wherein the method is applied to a first station in a power line communication PLC network, the PLC network comprises the first station, a second station, and a central coordinator CCO, and at least one of the first station and the second station is an unconnected station; and the method comprises:
generating a first broadcast packet in an n^{th} networking process of the PLC network, wherein n > 1, the first broadcast packet comprises a first network identifier NID and a terminal equipment identifier TEI, the first NID is determined by the CCO in an (n-1)^{th} networking process of the PLC network, and the TEI uses a preset value; and
sending the first broadcast packet.

2. The method according to claim 1, further comprising:
obtaining a second NID after being connected to the network in the n^{th} networking process of the PLC network, wherein the second NID is determined by the CCO in the n^{th} networking process of the PLC network; and
storing the second NID in a power-off non-volatile storage medium.

3. The method according to claim 1 or 2, further comprising:
obtaining role information when network connection duration in the n^{th} networking process of the PLC network is greater than or equal to a first preset time, wherein the role information indicates a proxy station or a non-proxy station; and
storing the role information in the power-off non-volatile storage medium.

4. The method according to any one of claims 1 to 3, wherein when the first station is an unconnected station, the first station comprises the first NID stored in the power-off non-volatile storage medium.

5. The method according to any one of claims 1 to 3, wherein when the first station is a connected station, the first station comprises the second NID and the first NID stored in the power-off non-volatile storage medium, and the second NID is determined by the CCO in the n^{th} networking process of the PLC network.

6. The method according to claim 5, further comprising:
deleting the first NID from the power-off non-volatile storage medium when the network connection duration in the n^{th} networking process of the PLC network is greater than or equal to a second preset time.

7. The method according to any one of claims 1 to 6, wherein the first broadcast packet further comprises a destination media access control MAC address.

8. A power line communication method, wherein the method is applied to a second station in a power line communication PLC network, the PLC network comprises a first station, the second station, and a central coordinator CCO, and at least one of the first station and the second station is an unconnected station; and the method comprises:
receiving a first broadcast packet, wherein the first broadcast packet comprises a first network identifier NID and a terminal equipment identifier TEI;
when the TEI uses a preset value, determining whether the first NID is consistent with a second NID stored in a power-off non-volatile storage medium, wherein the second NID is determined by the CCO in an (n-1)^{th} networking process of the PLC network; and
processing the first broadcast packet when the first NID is consistent with the second NID.

9. The method according to claim 8, wherein the first broadcast packet further comprises a first media access control MAC address, and the processing the first broadcast packet comprises:
determining whether the first MAC address is consistent with a local second MAC address;
when the first MAC address is inconsistent with the second MAC address, obtaining role information stored in the power-off non-volatile storage medium; and
forwarding the first broadcast packet when the role information indicates a proxy station; or
discarding the first broadcast packet when the role information indicates a non-proxy station.

10. The method according to claim 9, further comprising:
performing a corresponding operation based on the first broadcast packet when the first MAC address is consistent with the second MAC address.

11. The method according to any one of claims 8 to 10, further comprising:
discarding the first broadcast packet when the first NID is inconsistent with the second NID.

12. The method according to any one of claims 8 to 11, further comprising:
receiving a second broadcast packet; and
discarding the second broadcast packet when the second broadcast packet is consistent with the first broadcast packet.

13. The method according to any one of claims 8 to 12, further comprising:
obtaining a third NID after being connected to the network in an n^{th} networking process of the PLC network, wherein the third NID is determined by the CCO in the n^{th} networking process of the PLC network; and
storing the third NID in the power-off non-volatile storage medium.

14. The method according to any one of claims 8 to 13, further comprising:
obtaining the role information when network connection duration in the n^{th} networking process of the PLC network is greater than or equal to a first preset time, wherein the role information indicates the proxy station or the non-proxy station; and
storing the role information in the power-off non-volatile storage medium.

15. The method according to any one of claims 8 to 14, wherein when the second station is an unconnected station, the second station comprises the second NID stored in the power-off non-volatile storage medium.

16. The method according to any one of claims 8 to 14, wherein when the second station is a connected station, the second station comprises the third NID and the second NID stored in the power-off non-volatile storage medium, and the third NID is determined by the CCO in the n^{th} networking process of the PLC network.

17. The method according to claim 16, further comprising:
deleting the second NID from the power-off non-volatile storage medium when the network connection duration in the n^{th} networking process of the PLC network is greater than or equal to a second preset time.

18. A power line communication method, wherein the method is applied to a central coordinator CCO in a power line communication PLC network, the PLC network comprises a first station, a second station, and the CCO, and at least one of the first station and the second station is an unconnected station; and the method comprises:
obtaining a first network identifier NID, wherein the first NID is determined in an (n-1)^{th} networking process of the PLC network, and n > 1;
determining whether the first NID conflicts with another NID of the PLC network;
obtaining a target NID when it is determined that the first NID does not conflict with the another NID of the PLC network, wherein the target NID is the first NID; and
starting an n^{th} networking process of the PLC network based on the target NID.

19. The method according to claim 18, further comprising:
obtaining the target NID when it is determined that the first NID conflicts with the another NID of the PLC network, wherein the target NID is a second NID, and the second NID is different from the first NID.

20. A first station in a power line communication PLC network, wherein the PLC network comprises the first station, a second station, and a central coordinator CCO, and at least one of the first station and the second station is an unconnected station; and the first station comprises:
a processing module, configured to generate a first broadcast packet in an n^{th} networking process of the PLC network, wherein n > 1, the first broadcast packet comprises a first network identifier NID and a terminal equipment identifier TEI, the first NID is determined by the CCO in an (n-1)^{th} networking process of the PLC network, and the TEI uses a preset value; and
a sending module, configured to send the first broadcast packet.

21. The first station according to claim 20, wherein the processing module is further configured to: obtain a second NID after being connected to the network in the n^{th} networking process of the PLC network, wherein the second NID is determined by the CCO in the n^{th} networking process of the PLC network; and store the second NID in a power-off non-volatile storage medium.

22. The first station according to claim 20 or 21, wherein the processing module is further configured to: obtain role information when network connection duration in the n^{th} networking process of the PLC network is greater than or equal to a first preset time, wherein the role information indicates a proxy station or a non-proxy station; and store the role information in the power-off non-volatile storage medium.

23. The first station according to any one of claims 20 to 22, wherein when the first station is an unconnected station, the first station comprises the first NID stored in the power-off non-volatile storage medium.

24. The first station according to any one of claims 20 to 22, wherein when the first station is a connected station, the first station comprises the second NID and the first NID stored in the power-off non-volatile storage medium, and the second NID is determined by the CCO in the n^{th} networking process of the PLC network.

25. The first station according to claim 24, wherein the processing module is further configured to: delete the first NID from the power-off non-volatile storage medium when the network connection duration in the n^{th} networking process of the PLC network is greater than or equal to a second preset time.

26. The first station according to any one of claims 20 to 25, wherein the first broadcast packet further comprises a destination media access control MAC address.

27. A second station in a power line communication PLC network, wherein the PLC network comprises a first station, the second station, and a central coordinator CCO, and at least one of the first station and the second station is an unconnected station, and the second station comprises:
a receiving module, configured to receive a first broadcast packet, wherein the first broadcast packet comprises a first network identifier NID and a terminal equipment identifier TEI; and
a processing module, configured to: when the TEI uses a preset value, determine whether the first NID is consistent with a second NID stored in a power-off non-volatile storage medium, wherein the second NID is determined by the CCO in an (n-1)^{th} networking process of the PLC network; and process the first broadcast packet when the first NID is consistent with the second NID.

28. The second station according to claim 27, wherein the first broadcast packet further comprises a first media access control MAC address; and the processing module is specifically configured to: determine whether the first MAC address is consistent with a local second MAC address; when the first MAC address is inconsistent with the second MAC address, obtain role information stored in the power-off non-volatile storage medium; and forward the first broadcast packet when the role information indicates a proxy station; or discard the first broadcast packet when the role information indicates a non-proxy station.

29. The second station according to claim 28, wherein the processing module is further configured to perform a corresponding operation based on the first broadcast packet when the first MAC address is consistent with the second MAC address.

30. The second station according to any one of claims 27 to 29, wherein the processing module is further configured to discard the first broadcast packet when the first NID is inconsistent with the second NID.

31. The second station according to any one of claims 27 to 30, wherein the receiving module is further configured to receive a second broadcast packet; and
the processing module is further configured to discard the second broadcast packet when the second broadcast packet is consistent with the first broadcast packet.

32. The second station according to any one of claims 27 to 31, wherein the processing module is further configured to: obtain a third NID after being connected to the network in an n^{th} networking process of the PLC network, wherein the third NID is determined by the CCO in the n^{th} networking process of the PLC network; and store the third NID in the power-off non-volatile storage medium.

33. The second station according to any one of claims 27 to 32, wherein the processing module is further configured to: obtain the role information when network connection duration in the n^{th} networking process of the PLC network is greater than or equal to a first preset time, wherein the role information indicates the proxy station or the non-proxy station; and store the role information in the power-off non-volatile storage medium.

34. The second station according to any one of claims 27 to 33, wherein when the second station is an unconnected station, the second station comprises the second NID stored in the power-off non-volatile storage medium.

35. The second station according to any one of claims 27 to 33, wherein when the second station is a connected station, the second station comprises the third NID and the second NID stored in the power-off non-volatile storage medium, and the third NID is determined by the CCO in the n^{th} networking process of the PLC network.

36. The second station according to claim 35, wherein the processing module is further configured to: delete the second NID from the power-off non-volatile storage medium when the network connection duration in the n^{th} networking process of the PLC network is greater than or equal to a second preset time.

37. A central coordinator CCO in a power line communication PLC network, wherein the PLC network comprises a first station, a second station, and the CCO, and at least one of the first station and the second station is an unconnected station; and the CCO comprises:
a processing module, configured to: obtain a first network identifier NID, wherein the first NID is determined in an (n-1)^{th} networking process of the PLC network, and n > 1; determine whether the first NID conflicts with another NID of the PLC network; and obtain a target NID when it is determined that the first NID does not conflict with the another NID of the PLC network, wherein the target NID is the first NID; and
a networking module, configured to start an n^{th} networking process of the PLC network based on the target NID.

38. The CCO according to claim 37, wherein the processing module is further configured to obtain the target NID when it is determined that the first NID conflicts with the another NID of the PLC network, wherein the target NID is a second NID, and the second NID is different from the first NID.

39. A plurality of processors; and
a memory, configured to store one or more programs, wherein
when the one or more programs are executed by the one or more processors, the one or more processors are enabled to implement the method according to any one of claims 1 to 17.

40. A central coordinator CCO, comprising:
one or more processors; and
a memory, configured to store one or more programs, wherein
when the one or more programs are executed by the one or more processors, the one or more processors are enabled to implement the method according to claim 18 or 19.

41. A computer-readable storage medium, comprising a computer program, wherein when the computer program is executed on a computer, the computer is enabled to perform the method according to any one of claims 1 to 19.

42. A computer program product, wherein the computer program product comprises computer program code, and when the computer program code is run on a computer, the computer is enabled to perform the method according to any one of claims 1 to 19.
